# EUROPEAN PATENT SPECIFICATION

(11) **EP 3 243 583 B1**
(45) Date of publication and mention of the grant of the patent: **08.05.2019**
(21) Application number: 16169572.1
(22) Date of filing: 13.05.2016
(51) Int. Cl.: B22F 3/105, B28B 1/00, B23K 26/34, B29C 67/00, G05B 19/4097, B23K 26/03, B23Q 17/24, G01J 5/02, G01B 11/24, G06T 7/00, B33Y 30/00, B33Y 50/00, G01N 21/88, B22F 7/00, B22F 7/02

(54) **APPARATUS AND METHOD FOR ASSOCIATING A POSITION IN A CONSTRUCTION DATA SET WITH A POSITION IN A BUILDING SECTION OF THE APPARATUS**
VORRICHTUNG UND VERFAHREN ZUR ZUORDNUNG EINER POSITION IN EINEM KONSTRUKTIONSDATENSATZ MIT EINER POSITION IN EINEM GEBÄUDEABSCHNITT DER VORRICHTUNG
APPAREIL ET PROCÉDÉ POUR ASSOCIER UNE POSITION DANS UN ENSEMBLE DE DONNÉES DE CONSTRUCTION AVEC UNE POSITION DANS UNE SECTION DE CONSTRUCTION DE L'APPAREIL

(43) Date of publication of application: 15.11.2017
(73) Proprietor: SLM Solutions Group AG, 23560 Lübeck (DE)
(72) Inventor: Stengel, Christopher, 23560 Lübeck (DE); Alberts, Daniel, 23560 Lübeck (DE); Schwarze, Dieter, 23560 Lübeck (DE); Krol, Toni Adam, 23560 Lübeck (DE)
(74) Representative: Schicker, Silvia

(56) References cited:
- EP-A1- 3 067 132
- EP-A1- 3 095 591
- EP-A2- 1 466 718
- WO-A2-2015/040433
- DE-A1-102012 011 217
- DE-A1-102013 017 792
- US-A1- 2016 098 825
- S. CLIJSTERS ET AL: "In situ quality control of the selective laser melting process using a high-speed, real-time melt pool monitoring system", INTERNATIONAL JOURNAL OF ADVANCED MANUFACTURING TECHNOLOGY., vol. 75, no. 5-8, 10 August 2014 (2014-08-10), pages 1089-1101, XP055266002, LONDON; GB ISSN: 0268-3768, DOI: 10.1007/s00170-014-6214-8
- J-Y JENG ET AL: "On-Line Layer Profile Dimensions Measurement of Model Maker Rapid Prototyping Using Vision Technology", THE INTERNATIONAL JOURNAL OF ADVANCED MANUFACTURING TECHNOLOGY, SPRINGER, LONDON, vol. 17, no. 2, 1 January 2001 (2001-01-01), pages 125-133, XP002755854, ISSN: 0268-3768, DOI: 10.1007/S001700170200

## Description

The present invention generally relates to an apparatus and a method for associating a position in a construction data set with a position in a building section of the apparatus. In particular, the invention relates to an apparatus and a method for associating a position in a construction data set with a position in a building section for generating a three-dimensional work piece.

Powder bed fusion is an additive layering process by which pulverulent, in particular metallic and/or ceramic raw materials can be processed to three-dimensional work pieces of complex shapes. To that end, a raw material powder layer is applied onto a carrier (comprising, e.g., a substrate plate) and subjected to radiation (e.g., laser or particle radiation) in a site-selective manner in dependence on the desired geometry of the work piece that is to be produced. The radiation penetrating into the powder layer causes heating and consequently melting or sintering of the raw material powder particles. Further raw material powder layers are then applied successively to the layer on the carrier that has already been subjected to radiation treatment, until the work piece has the desired shape and size. Powder bed fusion may be employed for the production of prototypes, tools, replacement parts, high value components or medical prostheses, such as, for example, dental or orthopaedic prostheses, on the basis of CAD data.

It is further possible to use the technique of powder bed fusion for a so-called hybrid production, during which an additive element is produced onto a base element in order to generate a desired final work piece. Here, the base element may have been produced by means of conventional techniques, such as milling, turning, etc., and the additive element is produced by powder bed fusion as described above. Hereby, the base element is fixed to a substrate plate and may have a boundary surface substantially parallel to a surface of the substrate plate. In that case, the additive element can be easily added to the base element by means of powder bed fusion.

The above-described technique of hybrid production has the advantage that different target criteria can be met. The target criteria can be based on economic considerations. For example, it can be advantageous, e.g., due to production costs, to build a simple base geometry by means of conventional techniques, while more complex parts of the work piece (e.g., which cannot be produced conventionally) are added. A further reason for applying a hybrid production may be that a base element is too large to be produced by powder bed fusion (e.g., since the base element is larger than a maximum construction volume of the apparatus), such that only the complex sections of the work piece are added by powder bed fusion. Further, also mechanical criteria may be reasons for using a hybrid production. For example, particular properties of the work piece (e.g., strength) can only be achieved by means of conventional techniques, such that elements of the work piece, which shall exhibit these properties, may be produced by conventional techniques and all other elements are added by powder bed fusion. On the other hand, for example, particular properties of the work piece can only be achieved by means of powder bed fusion, such that elements of the work piece, which shall exhibit these properties, may be produced by powder bed fusion and all other elements are previously produced by conventional techniques.

As a further possibility, hybrid production may be applied for producing work pieces having material combinations comprising at least two different materials. Hence, the base element has not necessarily been produced by a conventional technique but may also have been produced by means of powder bed fusion using a first material and the additive element is added by powder bed fusion using a second material. Therefore, for example, a device may be used having at least two different building sections each for generating an element of a particular material. In this case, a base element may be produced in a first building section of the device and an additive element may be produced onto the base element in a second building section of the device. Alternatively, two separate devices may be used.

For generating the additive element by means of powder bed fusion, and apparatus for producing a three-dimensional work piece is used. The apparatus has a building section, in which the base element is positioned before the building process of the additive element is started. However, during positioning of the base element in the building section, spatial tolerances may occur, such that a predetermined (or nominal) position of the base element within the building section cannot be exactly met. In such a situation, when the apparatus starts to generate the additive element (i.e., produces a first layer of the additive element), it may happen that a starting layer of the additive element does not match a boundary surface of the base element. In other words, an additive boundary surface of the additive element may not exactly match a boundary surface of the base element. In case the base element has been produced by means of powder bed fusion, and in case such an offset occurs, it may happen that also a filling pattern (hatch pattern) of the first layer of the additive element does not match a filling pattern (hatch pattern) of an upmost layer of the base element.

In such a situation, when an offset between the additive boundary surface of the additive element and the boundary surface of the base element occurs, undesired edges and misalignments in the final three-dimensional work piece may occur.

S. CLIJSTERS ET AL: "In situ quality control of the selective laser melting process using a high-speed, real-time melt pool monitoring system", INTERNATIONAL JOURNAL OF ADVANCED MANUFACTORING TECHNOLOGY, vol. 75, no. 5-8, 10 August 2014, discloses an in situ monitoring system for selective laser melting (SLM). The system enables the operator to monitor the quality of the SLM job on-line and estimate the quality of the part accordingly.

EP 1 466 718 A2 discloses a method and apparatus for forming three dimensional objects by laser sintering that utilizes a broad area thermal vision system such as an infrared camera that can measure multiple temperatures across the target area and use that temperature data as feed back to a control system that both adjusts a zoned radiant heater system and adjusts scan speed and laser power to control temperatures across the target area.

DE 10 2013 017792 A1 discloses a method for producing a three-dimensional component by an electron-beam, laser-sintering or laser-melting process, in which the component is created by successively solidifying predetermined portions of individual layers of building material that can be solidified by being exposed to the effect of an electron-beam or laser-beam source by melting on the building material, wherein thermographic data records are recorded during the production of the layers, respectively characterizing a temperature profile of at least certain portions of the respective layer.

US 2016/098825 A1 discloses a feature extraction system that extracts geometrical features of a part using in-process data acquired during an additive manufacturing process.

WO 2015/040433 A2 discloses a spectrometer for detecting characteristic radiation generated by interaction of the metal with the or a further laser beam. The spectra recorded using the spectrometer may be used for feedback control during the solidification process
EP 3 067 132 A1 was published after the filing date of the present application and therefore falls under Art. 54(3) EPC. EP 3 067 132 A1 discloses that operation of an irradiation unit of an apparatus for producing a three-dimensional work piece is controlled in dependence on an operating temperature dependent change of at least one optical property of at least one optical element of the irradiation unit.

The invention is directed at the object of providing an apparatus and a method, which solves the above-described problem and/or other related problems.

This object is addressed by an apparatus for associating a position in a construction data set with a position in a building section of the apparatus, according to claim 1, and by a method for associating a position in a construction data set with a position in a building section of an apparatus, according to claim 8.

According to the invention, the apparatus for associating a position in a construction data set is defined as written in claim 1.

The apparatus may be an apparatus for generating a three-dimensional work piece, e.g., a powder bed fusion apparatus, such as, e.g., an apparatus for selective laser melting (SLM) or an apparatus for selective laser sintering. The construction data set may comprise CAD-data. For example, the construction data set may comprise a CAD-file. The construction data set may comprise information regarding an additive element to be produced onto the base element. In other words, the construction data set may define an additive element. The building section may be an area of the apparatus, in which a three-dimensional work piece can be generated, e.g., by powder bed fusion. The building section may comprise a process chamber.

The irradiation unit comprises at least one radiation source for emitting radiation in the form of particle radiation or electromagnetic radiation, for example. The irradiation unit may comprise, e.g., an electron source for generating an electron beam or a laser source for generating a laser beam. The apparatus comprises further a scanner unit, comprising, e.g., at least one adjustable mirror, for directing the radiation beam to a desired position within the building section. Further, the irradiation unit may comprise focusing means, such as at least one movable lens, for focusing the radiation beam to a desired focus position (spot position) within the building section. The scanning field may represent a section of a two-dimensional plane within the building section. The scanning field may have a rectangular shape. The boundary surface of the base element may substantially lie within the scanning field.

The detecting unit comprises a detector, e.g., an optical detector. The detecting unit may comprise a pyrometric detecting device for detecting thermal radiation. The detecting unit may comprise a detector sensitive for electromagnetic radiation in a wavelength region corresponding to thermal radiation emitted by a melting or sintering spot. The thermal radiation may be in the infrared wavelength range and the detector may be sensitive for thermal radiation in the infrared radiation range. The detector may output an electrical signal depending on an irradiation intensity of thermal radiation in a certain wavelength range at the detector. An evaluation unit may be provided for calculating a temperature value based on the electrical signal(s). Further, a plurality of detectors may be provided in the detecting unit, each detector being configured to detect thermal radiation in a predefined wavelength range.

The controller may comprise at least one CPU and may comprise at least one memory. The controller may be configured as one central controlling unit or may be represented by a plurality of controlling units not necessarily provided at the same location of the apparatus. The position information may comprise two-dimensional or three-dimensional position information indicating a location of the laser spot within the construction section. The detected electromagnetic radiation intensity may be recorded in a dataset together with the position information indicative of a current position of the radiation beam.

The position in the construction data set is associated with the position in the building section by storing at least one calibration parameter. Based on the calibration parameter, the apparatus is able to exactly direct the radiation beam to a desired location within the building section. For example, the radiation beam can be precisely directed to a position of the boundary surface of the base element in order to produce an additive element onto the base element.

The controller is configured to associate a position of an additive boundary surface of an additive element defined by the construction data set with the determined position of the boundary surface of the base element.

In this disclosure, the expression "additive boundary surface" is used for describing a boundary surface of the additive element, in order to distinguish it from the "boundary surface" of the base element. Here, the word "additive" of the expression "additive boundary surface" is only used for reasons of distinguishability and no technical meaning is intended by the word "additive" other than that the additive boundary surface belongs to the additive element.

The additive boundary surface of the additive element may correspond to a surface to be written as a first layer in a process of powder bed fusion for generating the additive element. The additive boundary surface may correspond to a surface of the additive element, wherein the additive boundary surface has the same shape and size as the boundary surface of the base element. The additive boundary surface may be a surface to be generated congruently onto the boundary surface of the base element.

A best fit algorithm may be used for fitting the determined position of the boundary surface of the base element (i.e., the determined real position of the boundary surface of the base element) with an additive boundary surface defined in the construction data set. Here, the best fit algorithm determines a best fit between a position of an additive boundary surface of an additive element defined by the construction data set with the determined position of the boundary surface of the base element.

The detecting unit is configured to detect the electromagnetic radiation intensity in dependence of the spot position of the radiation beam and to output the position information.

The detecting unit may comprise a light directing unit for directing light emitted at predetermined positions in the building section to a detector of the detecting unit. Here, the expression "light" is not limited to visible light and may cover, e.g., electromagnetic radiation in at least one of the visible spectrum, the infrared spectrum and the ultraviolet spectrum. In particular, the expression "light" used herein may cover electromagnetic radiation emitted as thermal radiation at a spot position of the radiation beam (e.g., a laser spot position). The light directing unit may comprise, e.g., a rotatable mirror having two rotation axes or a plurality of rotatable mirrors. The light directing unit may be electrically controllable such that light (thermal radiation) emitted at a specific predetermined point in a detection plane is directed to the detector of the detecting unit. The detection plane may correspond to a writing plane of the device, i.e., a plane corresponding to an upmost powder layer. The detecting unit is configured to determine the spot position based on a configuration of the light directing unit. For example, the spot position may be determined based on a mirror position of a rotatable mirror of the light directing unit. Further, the light detecting unit may comprise a two-dimensional optical detector configured to generate a two-dimensional image of a detection plane within the building section. In that case, the spot position is derived from the two-dimensional image by determining an intensity maximum of the two-dimensional image. The position information may indicate the spot position with regard to a reference coordinate system within the building section. For example, the position information may be two-dimensional position information indicating a spot position within a predefined plane of the building section, e.g., a plane comprising the boundary surface of the base element.

The controller is configured to determine the position information based on radiation position information input into the irradiation unit.

The irradiation unit may be configured to direct a radiation beam to a desired location within the building section. Therefore, the apparatus comprises a scanner unit, comprising, e.g., rotatable mirrors. A radiation position information may be input into the irradiation unit, wherein the radiation position information indicates a desired position of the radiation beam. For example, based on this radiation position information, rotatable mirrors of the scanner unit may be adjusted. The position information indicative of a current position of the radiation beam may be derived from the radiation position information.

The controller is configured to determine the position of the boundary surface of the base element based on the time-dependent intensity variations of the detected electromagnetic radiation intensity.

For example, the controller may observe the measured intensity for intensity variations. At positions, where an intensity variation occurs, an edge of the boundary surface of the base element may be detected. For this purpose, a threshold analysis may be applied by the controller. For example, at positions where the intensity is above a predetermined threshold, the controller may judge that the boundary surface exists at these locations and at positions where the intensity is below a predetermined threshold, the controller may judge that the boundary surface does not exist at these locations (or vice versa). Further, for example a first derivative of the detected intensity value over time or over position may be observed. The controller may observe the first derivative for peak positions and at positions, where a (positive or negative) peak exists, it may be judged that at these positions an edge of the boundary surface exists.

The apparatus is configured to produce an additive element onto the base element, an additive boundary surface of the additive element matching the boundary surface of the base element by considering an association between the position in the construction data set and the position in the building section.

The association between the position in the construction data set and the position in the building section may be expressed, e.g., by at least one calibration parameter. For example, the association between the position in the construction data set and the position in the building section may be expressed by an offset value in x-direction and by an offset value in a y-direction, wherein the x-direction and the y-direction lie within a plane comprising the boundary surface of the base element.

The apparatus is configured to generate the additive element onto the base element by powder bed fusion using the irradiation unit.

The apparatus may use the same irradiation unit for generating the additive element as for determining the position of the boundary surface of the base element. For generating the additive element, the irradiation unit may apply a higher power than during the process of determining the position of the boundary surface of the base element.

The controller is configured to generate a two-dimensional image, based on the detected electromagnetic radiation intensity and the associated position information, identify edges of the boundary surface of the base element in the two-dimensional image by using image processing, and determine the position of the boundary surface of the base element with regard to the scanning field, based on the identified edges.

According to a second aspect of the invention, the method for associating a position in a construction data set is defined as written in claim 7.

The method is carried out, by the apparatus according to the first aspect.

The method comprises associating a position of an additive boundary surface of an additive element defined by the construction data set with the determined position of the boundary surface of the base element.

The radiation beam may have an intensity so low that a material structure of the base element is not affected.

The radiation beam may have an intensity so low that material of the base element does not melt when the radiation beam is scanned over it. The intensity of the radiation beam may be lower than an intensity of a radiation beam used for a process of generating a three-dimensional work piece.

The radiation beam may be scanned over the predefined scanning field in a pattern comprising a plurality of irradiation vectors parallel to each other.

The plurality of irradiation vectors may have a fixed distance between each other.

The position of the boundary surface of the base element may be determined based on intensity variations of the detected electromagnetic radiation intensity.

The abrupt intensity variations over time (and, therefore, over space) is identified as corresponding to edges of the boundary surface. More precisely, in case the detected intensity changes from a low value to a high value, it may be judged that at this location of changing intensity, an edge of the boundary surface exists. For example, if the boundary surface emits thermal radiation having a higher intensity than the thermal radiation emitted by the surrounding area (e.g., filled with raw material powder), it may be judged that an intersection from low detected intensity to high detected intensity corresponds to a location at which the laser beam is scanned from the surrounding area to the boundary surface.

The method may further comprise producing an additive element onto the base element, an additive boundary surface of the additive element matching the boundary surface of the base element by considering an association between the position in the construction data set and the position in the building section.

The additive element may be generated onto the base element by powder bed fusion using the irradiation unit.

Preferred embodiments of the invention now are described in greater detail with reference to the appended schematic drawings wherein
- Fig. 1a: shows a schematic representation of a problem concerning an offset between a base element and an additive element, which may occur with apparatuses of the prior art;
- Fig. 1b: shows a schematic representation of an ideal situation, in which no offset occurs, according to the present disclosure;
- Fig. 2: shows a schematic side view of an apparatus according to the present disclosure;
- Fig. 3a: shows a process of detecting a position of a boundary surface of a base element; and
- Fig. 3b: shows an exemplary representation of a point cloud of points of intersection resulting from the process of Fig. 3a.

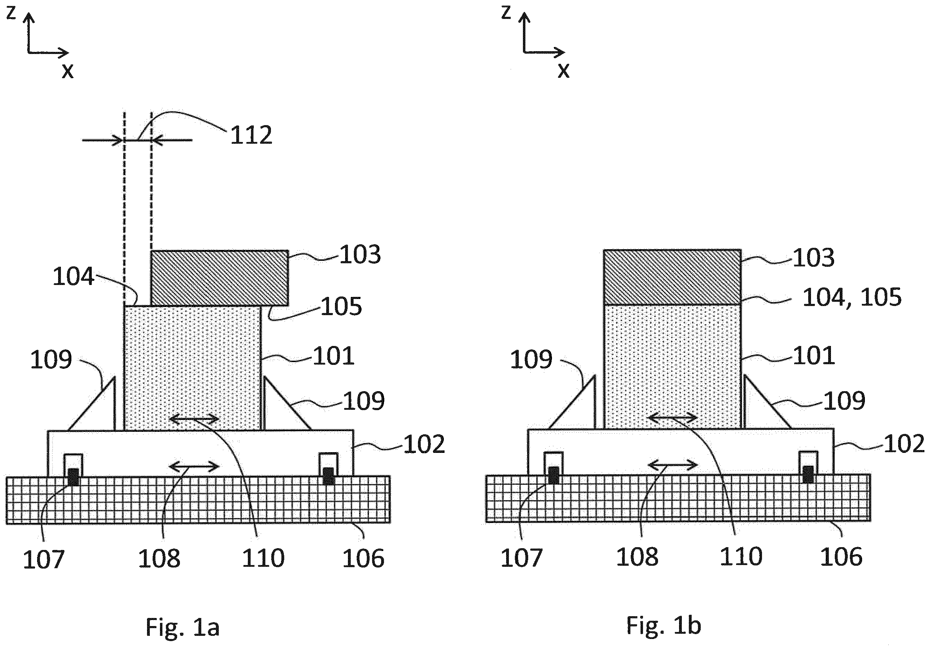

Figure 1a shows a schematic representation of an offset problem that may occur with apparatuses used for a hybrid production process of the prior art. It should be noted that the figures of the present disclosure are not to scale, unless explicitly indicated. In particular, figures 1a and 1b are not to scale and are merely schematic representations used for illustrative purposes.

In figures 1a and 1b, a base element 101 is fixed to a substrate plate 102, wherein an additive element 103 shall be generated onto the base element 101, such that a boundary surface 104 of the base element 101 matches an additive boundary surface 105 of the additive element 103. The base element 101 may have been produced by using conventional techniques or may have been produced by powder bed fusion (e.g., by means of selective laser melting, SLM).

As shown in figure 1a, the substrate plate 102 is positioned onto an apparatus plate 106 of a building section of an apparatus for generating a three-dimensional work piece. The substrate plate 102 is positioned by using suitable fastening means 107, such as screws or dowel pins, for example. However, during this positioning, first tolerances 108 may occur. Tolerances, according to this disclosure, are misalignments (i.e., position uncertainties). For example, these tolerances may occur with regard to an x-y-plane parallel to a surface of the apparatus plate 106 and parallel to a surface of the substrate plate 102, respectively. Further, tolerances may occur in a z-direction (a building direction) perpendicular to the aforementioned x-y-plane.

Further, the base element 101 is positioned onto the substrate plate 102 by means of suitable positioning means 109, such as a clamping device. For example, the clamping device described in the non-published European patent application EP 14 194 272 may be used as positioning means 109 for positioning and fixing the base element 101 to the substrate plate 102. During the positioning of the base element 101, second tolerances 110 may occur.

When the apparatus begins manufacturing the additive element 103 onto the base element 101, the apparatus is not aware of the exact position of the base element 101, and therefore the apparatus is not aware of the exact position of the boundary surface 104 of the base element 101. Hence, the first tolerances 108 and the second tolerances 110 (and/or other possible tolerances that may occur) leads to an offset 112 between the base element 101 and the additive element 103. Hence, the final three-dimensional work piece comprising the base element 101 and the additive element 103 exhibits an undesired edge.

Figure 1b shows an ideal situation, in which the boundary surface 104 of the base element 101 exactly matches the additive boundary surface 105 of the additive element 103. The situation shown in figure 1b can be achieved by means of a method and/or an apparatus as described in this disclosure. According to the present disclosure, an additive element 103 can be produced onto a base element 101 without undesired offsets or edges, even when tolerances 108, 110 exist.

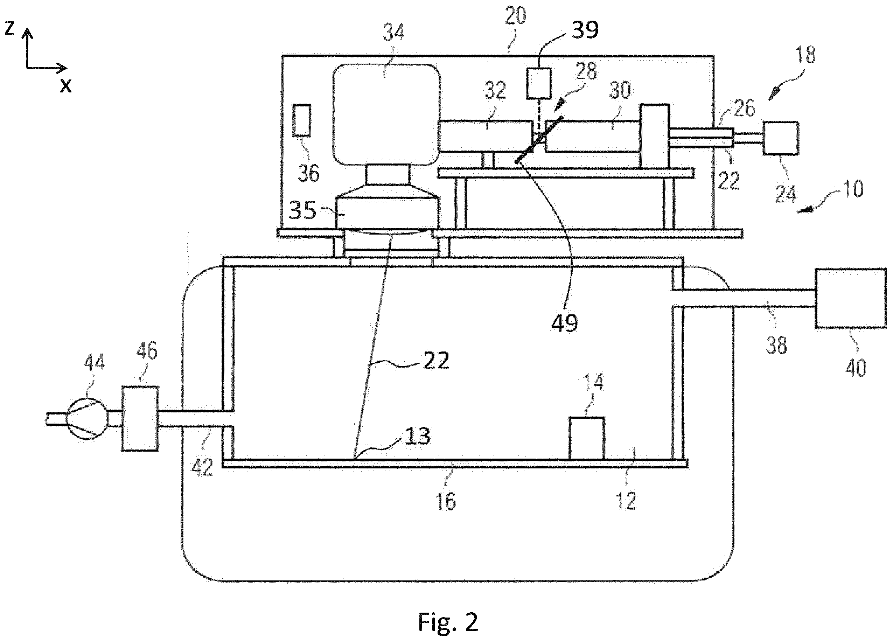

Figure 2 shows an apparatus 10 for producing a three-dimensional work piece. The apparatus 10 is an example of an apparatus for associating a position in a construction data set with a position in a building section of the apparatus, according to the present disclosure. With the apparatus 10, a method according to the present disclosure can be carried out.

The apparatus 10 comprises a building section in the form of a process chamber 12. A powder application device 14, which is disposed in the process chamber 12, serves to apply a raw material powder (not shown) onto a carrier 16. The carrier 16 is designed to be displaceable in vertical direction (not shown) so that, with increasing construction height of a work piece, as it is built up in layers from the raw material powder on the carrier 16, the carrier 16 can be moved downwards in the vertical direction. The carrier may comprise the apparatus plate 106 described above with reference to Figures 1a and 1b.

The apparatus 10 further comprises an irradiation unit 18 for selectively irradiating a radiation beam 22 onto the raw material powder applied onto the carrier 16. In the example shown in Figure 2, the radiation beam 22 is a laser beam and the irradiation unit 18 comprises a laser source 24. However, alternatively, e.g., the radiation beam 22 may be an electron beam and the irradiation unit 18 may comprise an electron source. By means of the irradiation unit 18, the raw material powder applied onto the carrier 16 may be subjected to laser radiation in a site-selective manner in dependence on the desired geometry of the work piece that is to be produced (e.g., the additive element 103). The irradiation unit 18 has a hermetically sealable housing 20. A radiation beam 22, in particular a laser beam 22, provided by a radiation source 24, in particular a laser source 24 which may, for example, comprise a diode pumped Ytterbium fiber laser emitting laser light at a wavelength of approximately 1070 to 1080 nm is directed into the housing 20 via an opening 26.

The irradiation unit 18 further comprises an optical unit 28 for guiding and processing the radiation beam 22, the optical unit 28 comprising optical elements such as a beam expander 30 for expanding the radiation beam 22 emitted by the radiation source 24, a focusing lens 32 for focusing the radiation beam 22, a scanner unit 34 and an object lens 35. The scanner unit 34 and the object lens 35 may, for example, be designed in the form of a galvanometer scanner and an f-theta object lens. Instead of the f-theta object lens, a three-dimensional focusing unit may be provided for scanning the radiation spot 13 in all three spatial directions x, y, and z. By means of the scanner unit 34, the position of the focus of the radiation beam 22 both in the direction of the beam path and in a plane perpendicular to the beam path can be changed and adapted. The operation of the irradiation unit 18 is controlled by means of a controller 36. Although only one controller 36 is shown in figure 2, a plurality of controllers may be provided, each controlling a different unit of the device. For example, one controller may control the operation of the irradiation unit 18 and another controller may control the operation of the pyrometric detection unit described below.

The process chamber 12 is sealable against the ambient atmosphere, i.e. against the environment surrounding the process chamber 12. The process chamber 12 is connected to a gas supply line 38 via which a gas provided by a gas source 40 may be supplied to the process chamber 12. The gas supplied to the process chamber 12 from the gas source 40 may be an inert gas such as, for example, Argon or Nitrogen. A discharge line 42 serves to discharge gas containing particulate impurities such as, for example, raw material powder particles or welding smoke particles from the process chamber 12 during irradiating electromagnetic or particle radiation onto the raw material powder applied onto the carrier 16 in order to produce a work piece made of said raw material powder by an additive layer construction method (powder bed fusion). The gas containing particulate impurities is discharged from the process chamber 12 by means of a conveying device 44 such as, for example, a pump. A filter 46 disposed in the discharge line 42 upstream of the conveying device 44 serves to filter the particulate impurities from the gas stream discharged from the process chamber 12. After passing the filter 46 the gas stream may be recirculated into the process chamber 12 via the gas supply line 38.

Finally, the apparatus 10 comprises a pyrometric detection device comprising an optical detector 39. In the embodiment of Figure 2, the optical detector 39 is positioned within the housing 20, which may be sealable. For example, the pyrometric detection device may be a pyrometric detection device as described in the non-published European patent application EP 14 194 378. The pyrometric detection device comprising the optical detector 39 corresponds to a detection unit according to the present disclosure.

The pyrometric detection device comprises an optical detector 39 configured to receive thermal radiation. The thermal radiation may be electromagnetic radiation in the visual and/or the infrared wavelength range having an intensity maximum at a specific wavelength depending on the temperature at the spot position 13 (according to the principles of black body radiation). For example in selective laser melting (SLM), the spot position 13 substantially corresponds to a position of a melt pool, where raw material powder is heated and melted. Hence, the pyrometric detection device may be configured to determine a temperature of a melt pool. The optical detector 39 is further configured to detect the thermal radiation, to generate an electrical signal depending on the thermal radiation, and to output a value indicating a temperature at a spot position 13, i.e., a position where the thermal radiation is emitted. In the present embodiment, the optical detector 39 outputs an intensity value indicative of a detected radiation intensity.

In order to receive thermal radiation emitted at a spot position 13 in the process chamber 12, the scanner unit 34 of the irradiation unit 18 is used to direct the thermal radiation emitted at a particular position to the optical detector 39. Further, a semi-transparent mirror 49 is used to reflect the thermal radiation to the detector 39 while being transparent for the laser radiation emitted by the radiation source 24. The position of the semi-transparent mirror 49 indicated in Figure 2 is only an exemplary position. The semi-transparent mirror 49 may be provided at different locations of the beam path of the radiation beam 22, for example upstream or downstream of the position indicated in Figure 2. The pyrometric detection device is controlled by the controller 36.

As an alternative to the arrangement shown in Figure 2, the pyrometric detection device may be configured as a separate unit having its own scanner unit, independent from the scanner unit 34 of the irradiation unit 18. In both cases, information regarding a radiation spot position 13, i.e. information regarding a radiation beam position, may be output by the pyrometric detection device or may be derived from a position signal (radiation position information) input into the scanner unit 34 of the irradiation unit 18. In other words, an intensity value detected by the optical detector 39 of the pyrometric detection device is recorded location-dependently, i.e., depending on a current position of the radiation beam 22. Therefore, intensity values detected by the optical detector 39 can be recorded together with position information indicating a position of the radiation beam. Therefore, both position information (information regarding a radiation beam position) and intensity information (intensity values detected by the optical detector 39) are used and processed.

For example, the pyrometric detecting unit may comprise at least the optical detector 39 and, optionally, further optical detectors. The optical detector 39 is configured to output an electrical signal depending on an intensity of detected thermal radiation in a specific wavelength range. A value indicating the temperature at the spot position 13 may be calculated based on the intensity signal output by the optical detector 39.

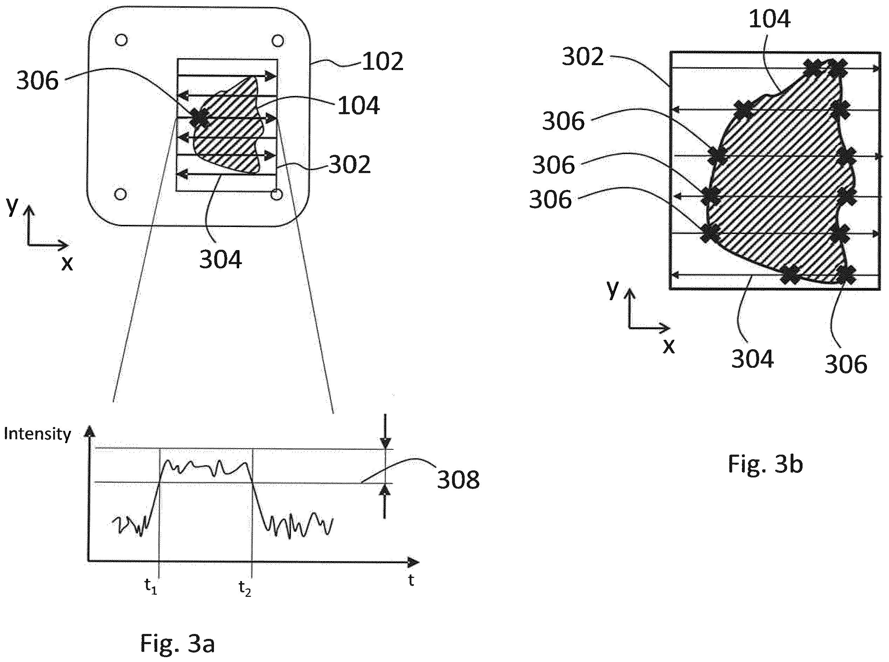

Figure 3a illustrates a process of detecting the boundary surface 104 of the base element 101, before the additive element 103 is produced onto the base element 101. Firstly, a scanning field 302 is defined. The scanning field 302 is a two-dimensional field parallel to the surface of the substrate plate 102 and comprises at least the entire boundary surface 104 of the base element 101. The scanning field 302 may be substantially rectangular, for example.

The scanning field 302 comprises a plurality of (virtual) irradiation vectors 304 arranged in parallel to each other. The irradiation vectors 34 do not necessarily need to be arranged in parallel to each other and may be arranged in any other suitable pattern. The radiation beam 22 is scanned along these irradiation vectors 304 using the scanner unit 34 of the irradiation unit 18. A direction of the individual irradiation vectors 304 and a distance between them may be arbitrarily set. Here, it is preferable that the irradiation vectors 304 scan over the edges of the boundary surface 104, i.e. over the outer contour of the boundary surface 104 of the base element 101. Thus, the irradiation vectors 304 cross the edges of the boundary surface 104 and, therefore, form points of intersection 306 with the edge of the boundary surface 104. One of these points of intersection 306 is exemplarily indicated as a cross in figure 3a.

The irradiation vectors 304 of the scanning field 302 are scanned by the radiation beam 22 (e.g., a laser beam) under a very low power. Alternatively, the laser spot may be defocused, such that a low power density is applied to the material irradiated by the radiation beam 22 (e.g., the base element 101 and raw material powder). For example, the power of a used laser beam 22 may be smaller than 100 W and a scanning speed may be 500 mm/s. Preferably, the irradiated regions of the base element 101 and of the raw material powder (if present) shall not be melted. Further, a material structure of the base element 101 shall not be affected by the scanning of the radiation beam 22. The irradiation vectors 304 are scanned by the radiation beam 22 not necessarily under a very low power and, alternatively, also a power may be used which corresponds to a power used for performing a powder bed fusion process (e.g. selective laser melting, SLM). In other words, any suitable power may be used for scanning the irradiation vectors 304.

The process described herein can be carried out both with and without raw material powder surrounding the base element 101. Hence, the process can be carried out before or after the base element 101 is embedded in raw material powder. Embedding the base element 101 in raw material powder may be necessary in order to generate a raw material powder layer substantially parallel to a surface of the substrate plate 102, for performing a powder bed fusion process.

While the radiation beam 22 is scanned along the irradiation vectors 304, the optical detector 39 of the pyrometric detection device measures a time-dependent intensity value. Since the intensity of thermal radiation is measured in a time-dependent manner, the intensity values may be linked to position information of the radiation beam 22 at the time the respective intensity value was recorded. In other words, the detector 39 measures a time-dependent signal, which may be transformed to a position-dependent signal based on information regarding a current position of the radiation beam 22. Additionally or alternatively, the pyrometric detection device may be configured to independently measure a position-dependent intensity value by using a two-dimensional detector configured to generate a two-dimensional image (e.g. a CCD) or by using a scanner unit independent of the scanner unit 34 of the irradiation unit 18. Thus, each detected intensity value can be associated with a corresponding position within the scanning field 302.

The lower part of figure 3a shows an exemplary diagram indicating the intensity measured by the optical detector 39 on a vertical axis and the time t on a horizontal axis. The diagram in the lower part of figure 3a shows the intensity variations measured while scanning along one of the irradiation vectors 304. Since the controller 36 of the apparatus controls the movement of the irradiation beam 22 via the scanner unit 34, it knows, at which position within the scanning field 302 and within the process chamber 12 the radiation beam 22 is directed at a particular time. Hence, the time values indicated in the diagram of figure 3a may be converted to position information.

As indicated in the diagram of figure 3a, intensity variations can be observed, wherein experiments have shown that a different (e.g., higher) intensity value is detected by the detector 39 when the radiation beam 22 irradiates the boundary surface 104 of the base element 101, compared to a situation, in which the radiation beam irradiates an area outside the boundary surface 104 (in which, e.g., raw material powder is provided).

As indicated in the diagram of figure 3a, this leads to two abrupt changes (jumps) in the intensity diagram for one of the irradiation vectors 304. A first jump occurs at time t₁ when the radiation beam 22 enters the boundary surface 104 of the base element 101. A second jump occurs at time t₂ when the radiation beam exits the boundary surface 104 into a surrounding area. The controller 36 can detect these jumps, e.g., by using a simple threshold analysis, wherein a predefined intensity value is set as a threshold value 308 and the controller 36 judges that a point of intersection 306 exists, where the measured intensity exceeds and falls below the threshold value 308, respectively. Additionally or alternatively, more complex methods for determining the points of intersection 306 may be applied, such as, e.g., a method considering a first derivative of the intensity diagram. For example, maximum values in this first derivative may be observed and it may be judged that these maximum values correspond to points of intersection 306.

Figure 3b shows a result of the analysis described above, wherein black crosses represent detected points of intersection 306. Based on these detected points of intersection 306, the controller 36 can determine a position of the boundary surface 104 with regard to the scanning field 302. In other words, the controller 36 can determine a position of the boundary surface 104 with regards to the substrate plate 102 and with regard to the process chamber 12 of the apparatus. This can be done, e.g., by suitable methods and/or algorithms. For example, the shape of the boundary surface 104 may be predefined and known by the controller 36. The shape of the boundary surface 104 may be identical with a shape of an additive boundary surface 105 of an additive element 103 to be produced onto the base element 101. The additive element 103 may be defined in a construction data set (e.g., a CAD-file) stored in a memory of the apparatus. Thereby, congruence between the detected position of the boundary surface 104 and the position of the additive boundary surface 105 defined in the construction data set may be achieved.

According to an alternative method of evaluation, the determined data points (comprising the measured intensity values and the corresponding position) are combined to an overall image (a two-dimensional image). In this two-dimensional image, x- and y-directions may indicate the x- and y-direction within the process chamber 12 (i.e., of the scanning field 302) and a color value (or intensity value) may indicate the measured intensity at this position. In the two-dimensional image, differences in the intensity can be observed, e.g., visually or by means of the controller 36. In order to improve the detection of the edges of the boundary surface 104 in the two-dimensional image, a false color representation may be used.

By means of conventional methods of image processing (using, e.g., an edge filter), the controller 36 can determine the edges of the boundary surface 104 within the two-dimensional image. Hence, contour information is generated. Similar to the evaluation method described above, in this alternative method of evaluation, a position of the boundary surface 104 may be determined based on this contour information.

Therefore, a position in a construction data set can be associated with a position in the building section 12. In other words, a position of the boundary surface 104 in the construction data set can be associated with a position in a writing plane (comprising the scanning field 302) in the building section 12. The writing plane may be defined as a plane, to which the radiation beam 22 is focused and in which a current melting or sintering process takes place. In other words, the writing plane may correspond to an upmost layer of raw material powder. This association can be saved, e.g., in a memory of the apparatus 10 as a calibration parameter or calibration parameters. Based on this association, the apparatus 10 can now direct the radiation beam 22 to a predefined position with regard to the boundary surface 104 of the base element 101.

Based on the association between the position in the construction data set and the position in the building section 12, the apparatus 10 can now generate the additive boundary surface 105 of the additive element 103 onto the boundary surface 104 of the base element 101. Since the controller 36 of the apparatus 10 knows the exact position of the laser beam 22 within the writing plane, with regard to the boundary surface 104 of the base element, the additive element 103 can be produced such that the additive boundary surface 105 of the additive element 103 is congruent with the boundary surface 104 of the base element 101, as shown in figure 1b.

By applying the technique described herein, precise positioning of the additive element 103 onto the base element 101 does not need to be achieved by means of highly precise positioning tools (which are very expensive) but rather by means of an optical system detecting the exact position of the base element 101. The described technique therefore has the advantage that costs can be reduced since expensive highly precise positioning tools are not necessary. Hence, universal modular clamping systems (e.g. the clamping device mentioned above) may be used. The additional costs of applying the technique described herein are low.

## Claims

1. An apparatus for associating a position in a construction data set with a position in a building section (12) of the apparatus, comprising:
a building section (12) for generating a three-dimensional work piece, configured to receive a base element (101) comprising a boundary surface (104);
an irradiation unit (18) configured to generate a radiation beam (22) and to scan the radiation beam (22) over a predefined scanning field (302), wherein the predefined scanning field (302) comprises at least part of the boundary surface (104) of the base element (101);
a detecting unit (39) configured to detect time-dependent electromagnetic radiation intensity of electromagnetic radiation emitted at a spot position (13) of the radiation beam (22) while the radiation beam (22) is scanned over the scanning field (302); and
a controller (36) configured to:
associate the detected electromagnetic radiation intensity with position information indicative of a current position of the radiation beam (22);
determine a position of the boundary surface (104) of the base element (101) with regard to the scanning field (302), based on intensity variations of the detected time-dependent electromagnetic radiation intensity and based on the position information, such that abrupt intensity variations over time are identified as corresponding to edges of the boundary surface (104);
associate a position in a construction data set with a position in the building section (12), based on the determined position of the boundary surface (104); and
associate a position of an additive boundary surface (105) of an additive element (103) defined by the construction data set with the determined position of the boundary surface (104) of the base element (101).

2. The apparatus of claim 1, wherein the detecting unit (39) is configured to detect the electromagnetic radiation intensity in dependence of the spot position (13) of the radiation beam (22) and to output the position information.

3. The apparatus of claim 1, wherein the controller (36) is configured to determine the position information based on radiation position information input into the irradiation unit (18).

4. The apparatus of any of claims 1 to 3, wherein the apparatus is configured to produce an additive element (103) onto the base element (101), an additive boundary surface (105) of the additive element (103) matching the boundary surface (104) of the base element (101) by considering an association between the position in the construction data set and the position in the building section (12).

5. The apparatus of claim 4, wherein the apparatus is configured to generate the additive element (103) onto the base element (101) by powder bed fusion using the irradiation unit (18).

6. The apparatus of any of claims 1 to 5, wherein the controller (36) is configured to
generate a two-dimensional image, based on the detected electromagnetic radiation intensity and the associated position information;
identify edges of the boundary surface (104) of the base element (101) in the two-dimensional image by using image processing; and
determine the position of the boundary surface (104) of the base element (101) with regard to the scanning field (302), based on the identified edges.

7. A method for associating a position in a construction data set with a position in a building section (12) of an apparatus, comprising:
positioning a base element (101) in a building section (12) for generating a three-dimensional work piece, the base element (101) comprising a boundary surface (104);
generating a radiation beam (22) and scanning the radiation beam over a predefined scanning field (302), wherein the predefined scanning field (302) comprises at least part of the boundary surface (104) of the base element (101);
detecting time-dependent electromagnetic radiation intensity of electromagnetic radiation emitted at a spot position (13) of the radiation beam (22) while the radiation beam (22) is scanned over the scanning field (302);
associating the detected electromagnetic radiation intensity with position information indicative of a current position of the radiation beam (22);
determining a position of the boundary surface (104) of the base element (101) with regard to the scanning field (302), based on intensity variations of the detected time-dependent electromagnetic radiation intensity and based on the position information, such that abrupt intensity variations over time are identified as corresponding to edges of the boundary surface (140);
associating a position in a construction data set with a position in the building section (12), based on the determined position of the boundary surface (104); and
associating a position of an additive boundary surface (105) of an additive element (103) defined by the construction data set with the determined position of the boundary surface (104) of the base element (101).

8. The method of claim 7, wherein
the radiation beam (22) has an intensity so low that a material structure of the base element (101) is not affected.

9. The method of claim 7 or 8, wherein
the radiation beam (22) is scanned over the predefined scanning field (302) in a pattern comprising a plurality of irradiation vectors (304) parallel to each other.

10. The method of any of claims 7 to 9, further comprising:
producing an additive element (103) onto the base element (101), an additive boundary surface (105) of the additive element (103) matching the boundary surface (104) of the base element (101) by considering an association between the position in the construction data set and the position in the building section (12).

11. The method of any of claims 8 to 10, wherein the additive element (103) is generated onto the base element (101) by powder bed fusion using the irradiation unit (18).

## Patentansprüche

1. Vorrichtung zum Zuordnen einer Position in einem Baudatensatz zu einer Position in einem Bauabschnitt (12) der Vorrichtung, die umfasst:
einen Bauabschnitt (12) zum Erzeugen eines dreidimensionalen Werkstücks, der dazu eingerichtet ist, ein Basiselement (101) mit einer Grenzfläche (104) aufzunehmen;
eine Bestrahlungseinheit (18), die dazu eingerichtet ist, einen Bestrahlungsstrahl (22) zu erzeugen und den Bestrahlungsstrahl über ein vordefiniertes Scanfeld (302) zu scannen, wobei das vordefinierte Scanfeld (302) zumindest einen Teil der Grenzfläche (104) des Basiselements (101) umfasst;
eine Erfassungseinheit (39), die dazu eingerichtet ist, eine zeitabhängige elektromagnetische Strahlungsintensität von elektromagnetischer Strahlung zu erfassen, die an einer Spot-Position (13) des Bestrahlungsstrahls (22) emittiert wird, während der Bestrahlungsstrahl (92) über das Scanfeld (302) gescannt wird; und
eine Steuerung (36), die dazu eingerichtet ist:
der erfassten elektromagnetischen Strahlungsintensität eine Positionsinformation zuzuordnen, die eine aktuelle Position des Bestrahlungsstrahls (22) angibt;
basierend auf Intensitätsvariationen der erfassten zeitabhängigen elektromagnetischen Strahlungsintensität und basierend auf der Positionsinformation eine Position der Grenzfläche (104) des Basiselements (101) bezüglich des Scanfelds (302) zu bestimmen, so dass abrupte Intensitätsvariationen in Abhängigkeit der Zeit als Rändern der Grenzfläche (104) entsprechend identifiziert werden;
basierend auf der bestimmten Position der Grenzfläche (104) eine Position in einem Baudatensatz einer Position in den Bauabschnitt (12) zuzuordnen; und
eine Position einer additiven Grenzfläche (105) eines additiven Elements (13), das durch den Konstruktionsdatensatz definiert wird, der bestimmten Position der Grenzfläche (104) des Basiselements (101) zuzuordnen.

2. Vorrichtung nach Anspruch 1, wobei die Erfassungseinheit (39) dazu eingerichtet ist, die elektromagnetische Strahlungsintensität in Abhängigkeit der Spot-Position (13) des Bestrahlungsstrahls (22) zu erfassen und die Positionsinformation auszugeben.

3. Vorrichtung nach Anspruch 1, wobei die Steuerung (36) dazu eingerichtet ist, die Positionsinformation basierend auf einer in die Bestrahlungseinheit (18) eingegebenen Strahlungpositionsinformation zu bestimmen.

4. Vorrichtung nach einem der Ansprüche 1 bis 3, wobei die Vorrichtung dazu eingerichtet ist, ein additives Element (103) auf dem Basiselement (101) zu erzeugen, wobei eine additive Grenzfläche (105) des additiven Elements (13) an die Grenzfläche (104) des Basiselements (101) angepasst ist, indem eine Zuordnung zwischen der Position in dem Konstruktionsdatensatz und der Position in dem Bauabschnitt (12) berücksichtigt wird.

5. Vorrichtung nach Anspruch 4, wobei die Vorrichtung dazu eingerichtet ist, das additive Element (103) durch Pulverbettfusion unter Verwendung der Bestrahlungseinheit (18) auf dem Basiselement (101) zu erzeugen.

6. Vorrichtung nach einem der Ansprüche 1 bis 5, wobei die Steuerung (36) dazu eingerichtet ist
basierend auf der erfassten elektromagnetischen Strahlungsintensität und der zugeordneten Positionsinformation ein zweidimensionales Bild zu erzeugen;
unter Verwendung von Bildverarbeitung Ränder der Grenzfläche (104) des Basiselements (101) in dem zweidimensionalen Bild zu identifizieren; und
basierend auf den identifizierten Rändern die Position der Grenzfläche (104) des Basiselements (101) bezüglich des Scanfelds (302) zu bestimmen.
wobei eine Größe des Überlappbereichs (19) vergrößert wird und/oder eine Form des

7. Verfahren zum Zuordnen einer Position in einem Baudatensatz zu einer Position in einem Bauabschnitt (12) einer Vorrichtung, dass umfasst:
Positionieren eines Basiselements (101) in einem Bauabschnitt (12) zum Erzeugen eines dreidimensionalen Werkstücks, wobei das Basiselement (101) eine Grenzfläche (104) umfasst;
Erzeugen eines Bestrahlungsstrahls und Scannen des Bestrahlungsstrahls über ein vordefiniertes Scanfeld (302), wobei das vordefinierte Scanfeld (302) zumindest einen Teil der Grenzfläche (104) des Basiselements (101) umfasst;
Erfassen einer zeitabhängigen elektromagnetischen Strahlungsintensität von elektromagnetischer Strahlung, die an einer Spot-Position (13) des Bestrahlungsstrahls (22) emittiert wird, während der Bestrahlungsstrahl (92) über das Scanfeld (302) gescannt wird;
Zuordnen der erfassten elektromagnetischen Strahlungsintensität zu einer Positionsinformation, die eine aktuelle Position des Bestrahlungsstrahls (22) angibt;
Bestimmen einer Position der Grenzfläche (104) des Basiselements (101) bezüglich des Scanfelds (302) basierend auf Intensitätsvariationen der erfassten zeitabhängigen elektromagnetischen Strahlungsintensität und basierend auf der Positionsinformation, so dass abrupte Intensitätsvariationen in Abhängigkeit der Zeit als Rändern der Grenzfläche (104) entsprechend identifiziert werden;
Zuordnen einer Position in einem Baudatensatz zu einer Position in den Bauabschnitt (12) basierend auf der bestimmten Position der Grenzfläche (104); und
Zuordnen einer Position einer additiven Grenzfläche (105) eines additiven Elements (13), das durch den Konstruktionsdatensatz definiert wird, zu der bestimmten Position der Grenzfläche (104) des Basiselements (101).

8. Verfahren nach Anspruch 7, wobei
der Bestrahlungsstrahl (22) eine Intensität hat, die so gering ist, dass eine Materialstruktur des Basiselements (101) nicht beeinträchtigt wird.

9. Verfahren nach Anspruch 7 oder 8, wobei
der Bestrahlungsstrahl (22) in einem Muster über das vordefinierte Scanfeld (302) gescannt wird, das eine Mehrzahl von parallel zueinander angeordneten Bestrahlungsvektoren (304) umfasst.

10. Verfahren nach einem der Ansprüche 7 bis 9, das ferner umfasst:
Erzeugen eines additiven Elements (103) auf dem Basiselement (101), wobei eine additive Grenzfläche (105) des additiven Elements (13) an die Grenzfläche (104) des Basiselements (101) angepasst ist, indem eine Zuordnung zwischen der Position in dem Konstruktionsdatensatz und der Position in dem Bauabschnitt (12) berücksichtigt wird.

11. Verfahren nach einem der Ansprüche 8 bis 10, wobei das additive Element (103) durch Pulverbettfusion unter Verwendung der Bestrahlungseinheit (18) auf dem Basiselement (101) erzeugt wird.

## Revendications

1. Appareil pour associer une position dans un ensemble de données de construction avec une position dans une section de construction (12) de l'appareil, comprenant :
une section de construction (12) destinée à générer une pièce de travail tridimensionnelle, configurée pour recevoir un élément de base (101) comprenant une surface limite (104) ;
une unité d'irradiation (18) configurée pour générer un faisceau de rayonnement (22) et pour balayer le faisceau de rayonnement (22) sur un champ de balayage prédéfini (302), dans lequel le champ de balayage prédéfini (302) comprend au moins une partie de la surface limite (104) de l'élément de base (101) ;
une unité de détection (39) configurée pour détecter une intensité de rayonnement électromagnétique dépendant du temps d'un rayonnement électromagnétique émis à une position de point (13) du faisceau de rayonnement (22) alors que le faisceau de rayonnement (22) est balayé sur le champ de balayage (302) ; et
un contrôleur (36) configuré pour :
associer l'intensité de rayonnement électromagnétique détectée avec des informations de position indiquant une position actuelle du faisceau de rayonnement (22) ;
déterminer une position de la surface limite (104) de l'élément de base (101) par rapport au champ de balayage (302), sur la base des variations d'intensité de l'intensité de rayonnement électromagnétique dépendant du temps détectée et sur la base des informations de position, d'une manière telle que des variations d'intensité brusques dans le temps sont identifiées comme correspondant aux bords de la surface limite (104) ;
associer une position dans un ensemble de données de construction avec une position dans la section de construction (12), sur la base de la position déterminée de la surface limite (104) ; et
associer une position d'une surface limite d'additif (105) d'un élément additif (103) définie par l'ensemble de données de construction avec la position déterminée de la surface limite (104) de l'élément de base (101).

2. Appareil selon la revendication 1, dans lequel l'unité de détection (39) est configurée pour détecter l'intensité de rayonnement électromagnétique en fonction de la position de point (13) du faisceau de rayonnement (22) et pour délivrer en sortie les informations de position.

3. Appareil selon la revendication 1, dans lequel le contrôleur (36) est configuré pour déterminer les informations de position sur la base des informations de position de rayonnement délivrées en entrée dans l'unité d'irradiation (18).

4. Appareil selon l'une quelconque des revendications 1 à 3, dans lequel l'appareil est configuré pour produire un élément additif (103) sur l'élément de base (101), une surface limite d'additif (105) de l'élément additif (103) correspondant à la surface limite (104) de l'élément de base (101) en prenant en considération une association entre la position dans l'ensemble de données de construction et la position dans la section de construction (12).

5. Appareil selon la revendication 4, dans lequel l'appareil est configuré pour générer l'élément additif (103) sur l'élément de base (101) par fusion sur lit de poudre en utilisant l'unité d'irradiation (18).

6. Appareil selon l'une quelconque des revendications 1 à 5, dans lequel le contrôleur (36) est configuré pour :
générer une image bidimensionnelle, sur la base de l'intensité de rayonnement électromagnétique détectée et des informations de position associées ;
identifier des bords de la surface limite (104) de l'élément de base (101) dans l'image bidimensionnelle en utilisant un traitement d'image; et
déterminer la position de la surface limite (104) de l'élément de base (101) par rapport au champ de balayage (302), sur la base des bords identifiés.

7. Procédé pour associer une position dans un ensemble de données de construction avec une position dans une section de construction (12) d'un appareil, comprenant les étapes consistant à :
positionner un élément de base (101) dans une section de construction (12) destinée à générer une pièce de travail tridimensionnelle, l'élément de base (101) comprenant une surface limite (104) ;
générer un faisceau de rayonnement (22) et balayer le faisceau de rayonnement sur un champ de balayage prédéfini (302), dans lequel le champ de balayage prédéfini (302) comprend au moins une partie de la surface limite (104) de l'élément de base (101) ;
détecter une intensité de rayonnement électromagnétique dépendant du temps d'un rayonnement électromagnétique émis à une position de point (13) du faisceau de rayonnement (22) alors que le faisceau de rayonnement (22) est balayé sur le champ de balayage (302) ;
associer l'intensité de rayonnement électromagnétique détectée avec des informations de position indiquant une position actuelle du faisceau de rayonnement (22) ;
déterminer une position de la surface limite (104) de l'élément de base (101) par rapport au champ de balayage (302), sur la base des variations d'intensité de l'intensité de rayonnement électromagnétique dépendant du temps détectée et sur la base des informations de position, d'une manière telle que des variations d'intensité brusques dans le temps sont identifiées comme correspondant aux bords de la surface limite (104) ;
associer une position dans un ensemble de données de construction avec une position dans la section de construction (12), sur la base de la position déterminée de la surface limite (104) ; et
associer une position d'une surface limite d'additif (105) d'un élément additif (103) définie par l'ensemble de données de construction avec la position déterminée de la surface limite (104) de l'élément de base (101).

8. Procédé selon la revendication 7, dans lequel
le faisceau de rayonnement (22) possède une intensité si basse qu'une structure de matériau de l'élément de base (101) n'est pas affectée.

9. Procédé selon la revendication 7 ou 8, dans lequel
le faisceau de rayonnement (22) est balayé sur le champ de balayage prédéfini (302) dans un motif comprenant une pluralité de facteurs d'irradiation (304) parallèles les uns aux autres.

10. Procédé selon l'une quelconque des revendications 7 à 9, comprenant en outre l'étape consistant à :
produire un élément additif (103) sur l'élément de base (101), une surface limite d'additif (105) de l'élément additif (103) correspondant à la surface limite (104) de l'élément de base (101) en prenant en considération une association entre la position dans l'ensemble de données de construction et la position dans la section de construction (12).

11. Procédé selon l'une quelconque des revendications 8 à 10, dans lequel l'élément additif (103) est généré sur l'élément de base (101) par fusion sur lit de poudre en utilisant l'unité d'irradiation (18).
